**Europäisches Patentamt**

**European Patent Office**

**Office européen des brevets**

(19)

(11) Publication number: **0 060 688**
**A2**

# EUROPEAN PATENT APPLICATION

(12)

(21) Application number: **82301245.5**

(22) Date of filing: **11.03.82**

(51) Int. Cl.³: **G 06 K 9/22,** G 06 F 3/02

(30) Priority: **17.03.81 GB 8108288**

(43) Date of publication of application: **22.09.82**
**Bulletin 82/38**

(84) Designated Contracting States: **AT BE CH DE FR GB IT**
**LI LU NL SE**

(71) Applicant: **Moore Business Forms, Inc., 300 Lang**
**Boulevard, Grand Island, New York 14072 (US)**

(72) Inventor: **Lukis, Lawrence Joseph, 44 Regency Drive,**
**Grand Island, NY 14072 (US)**

(74) Representative: **Townsend, Derek Thomas, MOORE**
**BUSINESS FORMS LIMITED Station Approach, Waltham**
**Cross Hertfordshire EN8 7ND (GB)**

(54) **Improvements in or relating to X-Y position measuring devices.**

(57) This invention is concerned with an x–y position measuring pad for use for example to recognise hand-writing comprises a writing pad having a pair of sheets one of which constitutes a high resistivity coating and the sheets being normally electrically insulated from one another but adapted to be brought into contact with one another by writing pressure by a writing implement upon the writing pad, an electrical switching circuit to cause current to flow through the pad along two alternate paths and a recognition circuit to recognise the position of the application of the writing implement on the pad by virtue of the electrical voltages generated in the alternate paths in which there is associated with the high resistivity layer part of the pad an integrated circuit and this integrated circuit includes a series of corrector circuits related to predetermined positions on the high resistivity layer which corrector circuits are respectively rendered operative to provide a corrector signal when a part of the the pad to which that respective corrector circuit relates is operative.

This invention has reference to x - y position measuring devices for use for example in character recognition devices use for example in connection with a writing machine for example with an autographic register.

Writing machines have been marketed for many years and these have included autographic registers. The autographic register often comprises a casing including a compartment to receive a pack of folded interleaved continuous stationery webs and means to feed the continuous stationery web through the autographic register. The continuous stationery web consists of an uppermost web and one or more underlying copy record webs. Copy material such as for example carbon paper is interleaved between the uppermost web and underlying copy record web or webs in order that data applied to the uppermost web can be reproduced on the underlying record web or webs. The webs are fed over a writing plate whereat the data is written by hand on the webs such data can record a business transaction but may record other data. When data has been recorded on the webs a handle at one side of the machine is operated whereby one form length of the web is fed out of the register and the underlying part or parts are fed into a filing compartment where the webs are filed and refolded and stored.

Portable autographic registers have also been
marketed. Generally these portable registers comprise
a compartment in which the unused forms are stored and
a writing plate. In such portable registers the continuous
stationery webs are pulled out of the storage
compartment by hand by the operator over the writing
plate and the individual form lengths of the business
form continuous web are located in position by means
for example a pair of locating pins which engage with
locating apertures at the leading end of each form
length of the autographic register business form.
One example of portable autographic register is
described in British Patent Specification No 1293677.

It has also been proposed to provide a character
recognition device for automatically recognising
characters as they are written. Thus in the
Specification of British Patent No 863431 there is
described apparatus for recording that a hand written
character had been written on a supporting surface,
and an electrical circuit to be activated on movement
of a writing instrument in writing the character
and means activated by the circuit for recording the
written character. This apparatus may be incorporated
in an autographic register or other apparatus for
receiving hand writing.

The Specification of British Patent No 1310683
describes apparatus for obtaining signals representative
of the co-ordinates of a point including a sheet of
resistive material and an electric resistive member
normally held out of contact with one another but
capable of making temporary contact on an application
for example of a writing implement and in which change
over means are provided to pass a current through the
material and number in alternative directions of right
angles to one another to derive signals representative
of the co-ordinate of the point.

In the Specification of our corresponding application
for British Patent No 7943987 (European Application for
Patent No 80304526.9) there is described a character
recognition apparatus having a writing pad comprising
a pair of sheets normally electrically insulated
from one another but adapted to be brought into contact
with one another but adapted to be brought into
contact with one another by writing pressure by a
writing implement upon the writing pad, an electrical
switching circuit to cause current  to flow along
the pad along two alternate paths and a recognition
circuit to recognise written characters by virtue of
the changes in electrical voltage in the alternate
paths characterised in that one of the sheets of the
writing pad comprises a central part of high resistivty and has a border of low resistivty that the voltage gradient along the length of the pad is linear and the other one of the sheets comprises a layer of conductive material.

It is an object of the present invention to provide an improved character recognition device capable of being associated with a writing machine in such a way that the characters hand written on a business form in the character recognition device may be recognised and processed.

According to the present invention an x - y position measuring pad for use for example to recognise hand writing comprises a writing pad having a pair of sheets one of which constitutes a high resistivity coating and the sheets being normally electrically insulated from one another but adopted to be brought into contact with one another by writing pressure  by a writing implement upon the writing pad, an electrical switching circuit to cause current to flow through the pad along two alternate paths and a recognition circuit to recognise the position of the application of the writing implement on the pad by virtue of the electrical voltages generated in the alternate paths characterised in that there is associated with the high resistivity layer part of the pad an integrated circuit and which integrated
circuit includes a series of corrector circuits
related to a predetermined positions on the high
resistivity layer which corrector circuits are
respectively rendered operative to provide a corrector
signal when a part of the pad to which that respective
corrector circuit relates is operative.

A character recognistion device embodying an x - y
position measuring pad in accordance with the present
invention will now be described by way of example
with reference to the accompanying drawings wherein :

> Fig 1 is a perspective view of a
>     portable register embodying
>     a character recognition device;
> Fig 2 is a sectional view of a portable
>     register;
> Fig 3 is a view of a continuous stationery
>     business form located in the
>     character recognition device, and
> Fig 4 is a plan view of one writing pad
>     forming part of the character
>     recognition device.

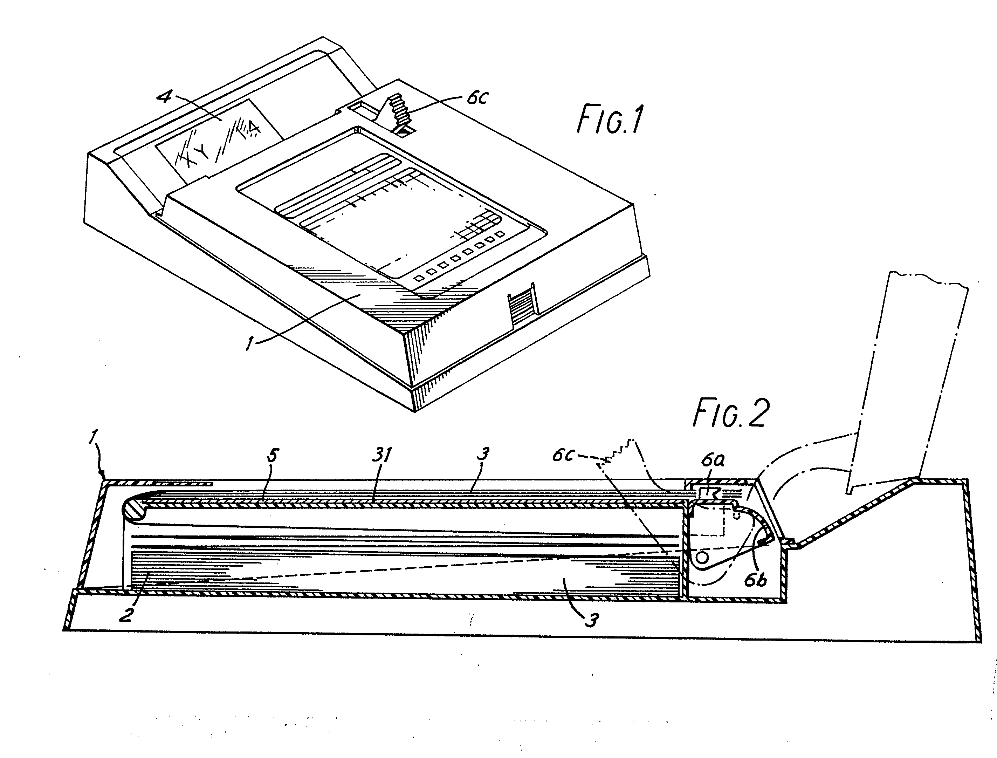

Referring to Figs 1 and 2 of the drawings there is
shown an autographic register 1 having a filing
compartment 2 for housing a pack of interleaved
continuous autographic register business forms
webs 3.  The webs are fed from the filing
compartment 2 to a writing pad 5 by feed means 6.
The feed means 6 comprises a pair of feed pins 6a
which engage in a  pair of apertures 12 adjacent
to the leading end of respective form lengths of the
continuous webs 3.  The feed pins are mounted on a
pivotal housing 6b which includes an operating lever
6c which projects through the casing of the register
1.  Operation of the lever 6c serves to pull the
webs through the register a sufficient distance
so that the leading part of the leading form
length of the web projects through an aperture
in the register a sufficient distance so that the
leading part may be gripped by the operator and the
web pulled through the register manually.  The web is
pulled through the register until the apertures 12
in the next form length engage the pins 6a when the
feeding of the web is halted.

A character recognition apparatus is associated
with the writing pad 5 and a display unit 4 is
positioned at the outfeed end of the register
to display characters recognised by the recognition
apparatus associated with the register and to
display instructions to the register operator.

The character recognition apparatus includes a
position measuring pad located on the writing
pad 5 and comprises a pair of sheets one having
a resistive coating and the other being of conductive
material.  The sheets are normally separated from
one another and capable of making temporary contact
the one with the other to create an electrical
circuit including the two sheets.  The writing pad
5 is so arranged that by virtue of the contact
made between the two sheets a circuit through
the sheet can be made and hence the position of
the point of contact between the two sheets can
be determined by virtue of the voltage measured.
Associated with the writing pad 5 is a voltage
measuring means 35 associated with a converter current
36 and a series of character recognition circuits
37 which are programmed to serve to recognise
characters written on the web 3.

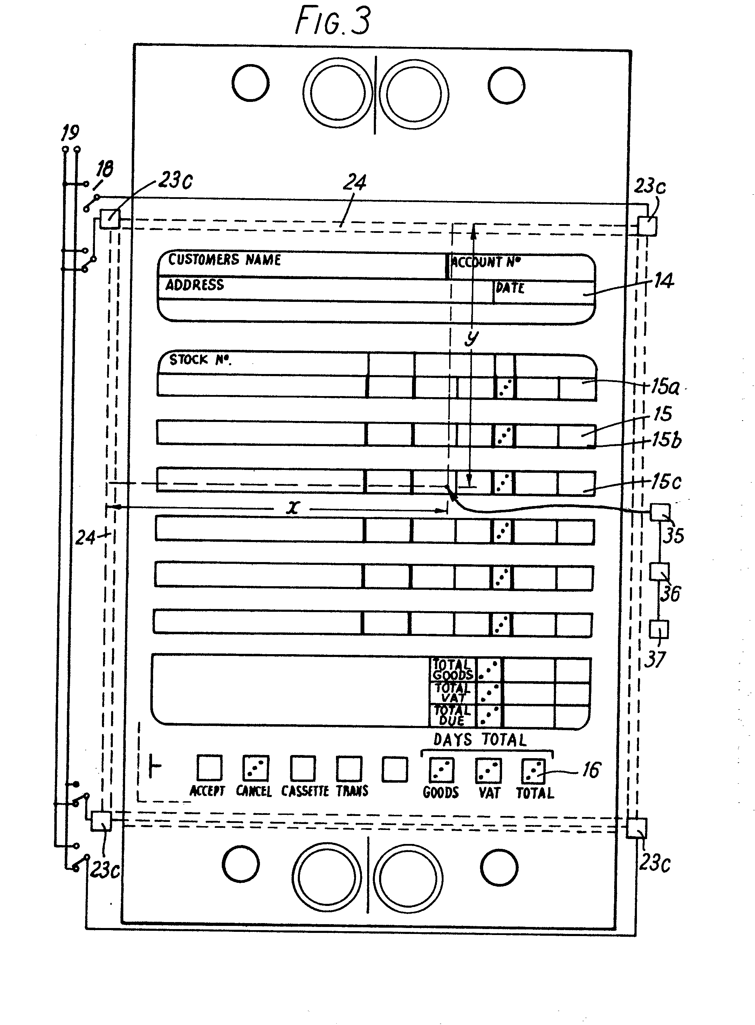

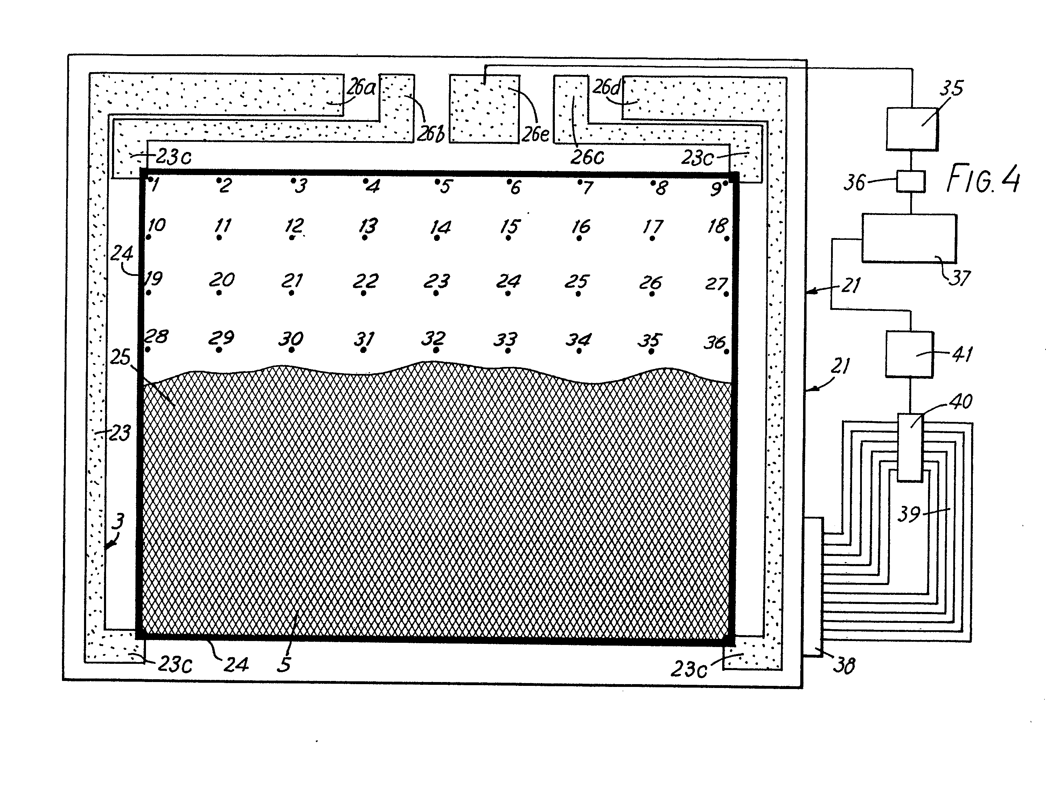

Referring to Fig 3 of the drawing there is shown a form length 11 of a continuous stationery business form with the leading part 13 of the following form length 11a divided from the form length 11 by a line of tear off perforations. the business form is made up of several similar interleaved parts only one of which is shown in Figs 3 and 4, but are shown diagrammatically in Fig 2. Each web of the business form is divided into form lengths and each form length has a pair of register apertures 12 adjacent its leading edge 13. The business form is fed out of the autographic register by means of feed pins which are operated by manual operation of a handle and by pulling the webs. Operation of the portable autographic register is more fully described in British Patent Specification No 1293677.

Each form length is of the same construction as the other form length and each form length is divided into predetermined writing areas 14, 15, 16. As shown the area 14 is an address area to receive details of a customers name, address, account number and the date and the area 15 is divided into several separate areas 15a, 15b, 15c etc each of which is to receive details of a sales transaction for example to receive details of a stock No or description and details of quantity unit price and total proce of commodity or commodities.

An additional sub area 15a is to receive any special instructions as may be necessary to record together with an area to receive details of the total value of the whole transaction together with other miscellaneous information (Value Added Tax, etc). A still further area 16 is to receive instructions related to the operation of the register. As shown these instructions include an accept instruction, a cancel instruction, and a signal to a days total instruction in order that the total goods sold in a day, the total of Value Added Tax due in a days trading and the total value of cash generated may be indicated.

On the left hand side of the area 16 is a graduation mark 17 consisting of a vertical line and a horizontal line which abuts the vertical line at its centre point. The graduation mark 17 co-operates with a co-ordinated position recognising apparatus to define the position of the graduation mark (to which a marking pressure is applied by a pencil or other writing implement), so that the position of the mark with respect to the writing pad 10 may be determined. The co-ordinated position recognising apparatus will be hereinafter described.

It is arranged that the character recognition pad is positioned in spaced relationship with the feeding pins 6a in the register the apertures on the business form are arranged in a predetermined relationship with the areas 14, 15, and 16 on each form length of business forms. Thus, when a form length is halted by the apertures coming into engagement with the feed pins 6a the respective areas 14, 15, 16, and 17 on the business form are arranged to overlie respective predetermined positions on the character recognition pad 5. When the form length is located in the predetermined halted position in relation to the pad 5 and the pressure is applied to the form to make a mark which is for example part of a character in a selected one of the areas 14, 15, 16 and 17 to make an electrical contact between the two sheets of the character recognition pad 5 an electrical circuit is made through the two sheets. Thus, as shown in Fig 3 the continuous web 3 is arranged in predetermined relationship with the apertures 12 which are aligned with the feed pins 6a in the autographic register. The feed pins 6a are arranged in predetermined relationship with the character recognition pad 5.

The pad comprises a pair of spaced apart sheets
and the top sheet is connected by the electrodes
to a respective appropriate switch 18 and to an
electric supply 19.

Referring to Figs 4 of the drawing there is shown a
writing pad 5 including a rigid base board 21 of
non-conducting material (such as that which is
usually used as a base for printed circuit boards,
for example the material known as fibreglass)
which serves as the mechanical supporting part
of the writing pad. A layer of conductive
connector material 3 is printed on the base board
21. The material of the conductive connector
layer is applied in the form of an etched copper
layer similar to that used on printed circuit
boards or may be applied as an ink which embodies
silver particles to provide a coating having a
resistance of about 0.01ohms per square area (and
hereinafter referred to as a low resistance). The
coductive connector coatings serve to connect the
medium resistance borders (to be hereinafter
described) to printed connectors 26 at the top
edge.

Printed on top of the low resistance conductive connector layer 23 is a medium resistance border layer 24 which extends completely around the periphery of a higher resistance coating layer 25 (to be hereinafter described) and overlies the innerpart of the conductive layer 23. The medium resistance border layer 24 overlaps the low resistance layer 23 at the corners thereof.

The medium resistance border layer has a width of between three hundreths and five hundreths of an inch (0.03" to 0.05") and may be printed from an ink embodying a mixture of silver and carbon particles to give a resistance to the order of one phm per square area. The medium resistance area is shown in black in Fig 4 of the drawings.

A higher resistance coating 25 is printed on the board shown in Fig 4 within the border formed by the border layer 24 but partially overlies the border layer 4 where is shown in cross hatching. the high resistance coating layer 25 comprises a main rectangular part 25a lying within the border layer 24.

The coating 25 which has a resistance of about 1000 ohms per square area may be printed from an ink having conducting material (preferably carbon/or silver) and a resin, a plasticizer and a solvent. This coating has a thickness of about 0.001".

In order to prevent the coating 5 from being scratched during transit or when being loaded into or unloaded from the character recognition apparatus the layer 5 may comprise a cover layer having a resistance of about 100,000 ohms per square.

The coating is similar in constitution to the main coating 5 but contains a smaller proportion of conducting material and has a thickness of less than 0.001"

The low resistance conductive layer 23 comprises a series of connector areas arranged at the top edge of the writing pad as shown in Fig 4, to an external circuit. As shown the connector areas 26 are positioned at the end of a conductive lead to a rectangular area 23c adjacent each corner of the highresistance area. these connections are made from the connectors 26a, 26b, 26c, 26d to the rectangular corner areas 23c adjacent the respective four corners of the rectangular resistive parts 25a.

Each one of the resistive layer 25 and the border layer 24 are formed by screen printing on the sheet 22. The layers have a thickness of about 0.001" or even less.

Positioned above the resistive layer 25 and separate therefrom is an easily replaceable cusion layer positioned in the area where writing pressure is applied.  This cusion layer 31 is intended to prevent an electrical circuit being made when the operators hand rests on the writing surface and consists of two leaf layers of normally electrically insulating material and between which leaf layers there is provided a layer of a dielectric non-conductive elastomeric gel material.

A suitable gel is that supplied by Dow Corning under the Trade Mark SYLGARD Q3-6527.  this material is supplied in two parts of Part A/Part B in the range

of 1.65/1 to 1/1 is suitable.  The gel layer has a thickness of between 0.005" to 0.0050" and preferably between 0.010" and 0.012"

The upper leaf layer is a polymeric film coated or treated on the side adjacent the elastomeric gel material with conductive  material of low electrical resistance typically less than 1,000 ohms per square.

This may comprise metallised film or conductive ink coating on the film and preferably comprises a conductive ink which is screen printed onto the lower face of the flexible sheet.  The conductive material in this layer is connected by an integral electric connection through the conductive material in an electrical circuit to be hereinafter described, to voltage measuring means.

The said lower leaf is a volume conductive
film having a low electrical resistance through
the film and a high electrical resistance across
the film.  The ratio of through resistance to
across resistance should be less than 1/100.  It
is also required that the resistance through the
film should be less than 10,000 ohms per square
and the resistance across the film should be
greater than 50,000 ohms per square.  Such a
material may be filled polymeric film containing
conductive material such as carbon such as sold
under the Trade Mark Velostat by the 3M's Company
or may consist of an elastomeric film such as
a silicone film containing finely dispersed
nickel particles.

The upper leaf and the lower leaf are welded
together as by heat sealing at their margins
to contain the elastomeric material between sheets.
A further protective flexible sheet is provided
over the conductive leaf layer 31 and may
comprise a polyester film sheet having a thickness
of the order of one thousandth of an inch (0.001").

An electrical connection is made between the upper
leaf layer and an electrical circuit external of
the writing pad. This connection is made through
the area 6e adjacent the areas 26b, 26c, electrical
connection is made from these respective areas
26a, 26b, 26c, 26d, to the electric supply 19
and from the area 26e to the voltage measuring
means 35.

An electrical switching circuit as shown in
Fig 3 is provided whereby an electrical voltage
is connected alternately between the connectors
26a, 26b and the voltage measuring means on the
one hand and the connectors 26c, 26d and the
voltage measuring means 35 on the other hand.
By means of these connections current is caused
to flow through the resistive layer first in
one direction and then through the resistive
layer in another direction at right angles
to the first direction.

The writing pad so described constitutes a
two-dimensional potentiometer by virtue of the
alternate electrical connections between the
connectors 26b, 26c on the one hand and 26a,
26d on the other hand to make one electrical
connection and also between the connectors 26b,
26a on the one hand and 26c, 26d on the other hand, to provide alternately generated voltages across
the writing pad so that when an electric connection
is made between the upper leaf layer and the
main coating layer 25a, a voltage is applied
to the layer 25a representative of the co-ordinates
of the point of contact between the sheets 23
and 31.

Referring to Fig 3 there is shown a writing pad
(shown in dotted lines) with an electric DC
voltage supply connected to the positive and
negative terminals 19 and the terminals are
connected to switches 18 and thence to the connector
leads 26b, 26c, 26a and 26d (Fg 4).  The switches
are ganged together so the switches operate
together and the switches are arranged so that
the connector 26c and the rectangular area 23c
is always connected to the positive supply
and the connector 26a and rectangular area 23a
is always connected to the negative supply.
Connectors 26b, 26d and areas 23b 23d are alternatively
connected to the minus and the plus supply
respectively in the switch down condition
wherein the x co-ordinate is measured thence
to the plus and minus respectively in the switch
down condition wherein the x co-ordinate is
measured thence to the plus and minus respectively
in the switch up condition, wherein the y co-ordinate
is measured.

A connection is made from the conducting layer on the leaf layer 31a to a voltage measuring means 35. This voltage measuring means is adapted to read the voltage applied across the resistive layer of the writing pad which is representative of a co-ordinate of a point x, y which is representative of the writing position. Thus, if a writing implement is recording a message on the writing pad at any one time the position of the writing implement maybe represented by two voltages.

The voltage measuring means 35 is connected to an A/D converter 36 and character processor 37 arranged to recognise characters in accordance with the changes in the voltages corresponding to the distances x and y hereinbefore referred to.

Although we have shown the ganged switches 34 as being of the mechanical kind these switches can be electronic switches.

It is desirable that the voltage drop across the
high resistance coating layer 25 shall be linear
but if there are irregularities in the coating
the voltage drop may not be accurately linear.
To accomodate for these irregularities an
integrated circuit 38 is provided adjacent to
the writing pad 5.  The integrated circuit 38
includes a series of corrector circuits related
to predetermined positions on the high resistivity
layer 25 which corrector circuits are respectively
rendered operative to provide a corrector signal
when a part of the pad to which that respective
corrector circuit relates is operative.

As shown in Fig 4 the high resistivity layer 25
is divided into areas surrounding a series of
points.  The layer is provided with nine lines
of points each line having nine points.  As shown in
Fig 4 there are three lines of points 1 to 9; 10
to 18 and 19 to 27 and these lines are distributed
evenly across the pad.  The high resistivity
coating 25 on the pad is contacted by a matrix
of a plurality of sensing pins (not shown in
the drawings).  These pins are arranged with nine
lines of pins, each line having nine pins and the
pins correspond in position with the points
1 to 9; 10 to 18; etc as shown in Fig 4.

A series of pulses are applied to the pins
of the matrix in sequence and the resistance
of the coating 25 in the horizontal (x) and vertical
(y) planes is measured and resistance values
relating to a correction to be applied to a
particular point under consideration to make the
voltage drop across the coating be linear can
be calculated.

To compensate for the inaccuracies the integrated
circuit 38 including a series of corrector
circuits has the corrector circuits arranged to
correspond with the resistance value required
for the respective points on the high resistance
coating 25.  A programme circuit is associated
with the corrector circuits on the integrated
circuit 38 so that when a character is being written
on an area adjacent a selected one of the points
a corrector code signal being complementary to any
errors in the resistance value of a particular
point on the coating 25 is applied to the voltage
measuring circuit 35.

The address positions relate to the correction signals related to corrections in the horizontal (x) plane and the vertical (y) plane for each of the eighty one positions.  Thus the positions of the corrector signals recorded on the integrated circuit 38 may relate to the following matters :

| | |
|---|---|
| 1a | x corrector term for position 1 |
| 1b | y corrector term for position 1 |
| 2a | x corrector term for position 2 |
| 2b | y corrector term for position 2 |
| 3a | x corrector term for position 3 |
| 3b | y corrector term for position 3 |
| 4a | ................................. |
| 4b | ................................. |
| | |
| 81a | x corrector term for position 81 |
| 81b | y corrector term for position 81 |

The interface 41 is so connected to the character processor 37 so that when a particular part of the character recognition pad 5 is being written upon a correction code signal is also applied to the character processor 37 whereupon a computation is effected to derive a corrected value representing the position of the writing implement and hence the character being written.

More than 81 correction points may be used if even greater accuracy is desired.

To compensate for the inaccuracies the integrated circuit 38 including a series of corrector circuits has the corrector circuits arranged to correspond with the resistance value required for the respective points on the high resistance coating 25. A programme circuit is associated with the corrector circuits on the integrated circuit 38 so that when a character is being written on an area adjacent a selected one of the points a correcto code signal being complementary to any errors in the resistance value of a particular point on the coating 25 is applied to the voltage measuring circuit 35.

Referring to Fig 4 of the drawings an example implementation of the corrector system is shown. The programable read only memory integrated circuit 38 is included on the printed circuit board forming the base of the pad. A series of connections 39 are made between this integrated circuit 38 and a connector 40. The connector 40 has 24 pins with 24 connections to the integrated circuit 38 (although for the sake of simplicity only 12 connections are shown in Fig 4).

Of these connections the first eleven connections
are address pins and a further eight pins are
data pins.  The first eleven address pins can
provide a total of 2047 different combinations
and the further eight pins can provide a total
of 255 data combinations.  These connections 39
serve to provide connections between the
integrated circuit 38 and an interface 41
with the character processor 37.

0060688

WHAT WE CLAIM IS:- ·

1. An x-÷ y position measuring pad for use
for example to recognise hand writing comprises
a writing pad having a pair of sheets one of which
constitutes a high resistivity coating and the
sheets being normally electrically insulated from
one another but adapted to be brought into contact
with one another by writing pressure by a writing
implement upon the writing pad, an electrical
switching circuit to cause current to flow through
the pad along two alternate paths and a recognition
circuit to recognise the position of the application
of the writing implement on the pad by virtue of
the electrical voltages generated in the alternate
paths characterised in that there is associated
with the high resistivity layer part of the pad
on intergrated circuit and which intergrated circuit
includes a series of corrector circuits related to
predetermined positions on the high resistivity
layer which corrector circuits are respectively
rendered operative to provide a corrector signal
when a part of the pad to which that respective
corrector circuit relates is operative.

2.    An x - y position measuring pad according
to Claim 1 showing a series of sensing pins
arranged in lines and rows and capable of being
connected and capable of controlling the corrector
circuits in accordance with the measurement of the
conductivity of the pad to determine the value
of the corrector signal to be applied when the
pad is operative to generate electrical volatages
in the alternate paths.

3.    An x - y position measuring pad according to
claim 2 having a pulse supply means to supply a
series of pulses to the sensing pins and a coating
resistance of the coating in the horizontal (x)
and vertical (y) planes relating to a correction
to be applied to the series of points arranged
in rows and lines where the pad is contacted by the
sensing pins.

4.    An x - y position measuring pad according to
claim 3 wherein the voltage  measuring means is
connected to an A/D converter circuit and a
character processor circuit.

5.   An x - y position measuring pad constructed
arranged and adapted to operate substantially as
herein described with reference to the accompanying
drawings.

8230124 5 . 5

1/3

0060688

Sheet 2
3 Sheets

*FIG.1*

4

6c

1

*FIG.2*

1

5    31    3

6c    6a

6b

2

3    3

## FIG.3

Sheet 2
3 Sheets
0060688

3/3

FIG.4